# EUROPEAN PATENT APPLICATION

(11) **EP 4 809 901 A1**
(43) Date of publication of application: **23.09.2026**
(21) Application number: 24894535.4
(22) Date of filing: 15.11.2024
(51) Int. Cl.: A47L 15/44, A47L 15/00, F04B 43/12, F04B 49/06, G01P 3/487

(54) **DISHWASHER AND CONTROL METHOD THEREFOR**

(30) Priority: 20.11.2023 KR 20230161325
(71) Applicant: LG Electronics Inc., Yeongdeungpo-gu Seoul 07336 (KR)
(72) Inventor: SONG, Woongsup, Seoul 08592 (KR); LEE, Minhyuk, Seoul 08592 (KR); KIM, Seokhyun, Seoul 08592 (KR); LEE, Sunghun, Seoul 08592 (KR)
(74) Representative: Schott, Jakob Valentin
(86) International application number: PCT/KR2024/018104
(87) International publication number: WO 2025/110642

(57) **Abstract**

The present disclosure relates to a dishwasher and a control method therefor. A dishwasher of the present disclosure comprises: a tub forming a washing space in which dishes are placed, and having one open side; a door disposed on one side of the tub, and opens and closes the open side of the tub; and a detergent supply device that supplies detergent to the washing space. In addition, the detergent supply device comprises: a detergent tank forming a storage space in which detergent is stored; a housing forming a mounting space where the detergent tank is mounted; a pump which is mounted on one side of the detergent tank and transfers the detergent stored in the storage space to the washing space; and a motor disposed on one side of the housing and operates the pump. The pump comprises: a pump tube connected to the detergent tank so as to supply the detergent stored in the detergent tank to the washing space; a plurality of pressing rollers which are connected to the motor so as to rotate about a pump rotation shaft, and which press one side of the pump tube; and a magnet which rotates about the pump rotation shaft, wherein a detection sensor disposed in the housing to sense the number of revolutions of the pump by sensing the magnet, and the detection sensor may sense rotation of the pump.

## Description

### [Technical Field]

The present disclosure relates to a dishwasher and a control method therefor, and more specifically, to a dishwasher that supplies detergent using a pump and a control method therefor.

### [Background Art]

A dishwasher is a device that washes, rinses, and dries dishes to remove dirt and grime adhering to dishes. For washing, a dishwasher dispenses detergent solution or detergent powder into a dispenser located inside the dishwasher.

However, there is the inconvenience of having to manually add a detergent or the like every time the dishwasher is used. Furthermore, since the addition of a detergent or the like is performed manually by the user each time, the amount of detergent added may vary.

To solve these problems, dishwashers including a detergent supply device that stores a certain amount of detergent and supplies only a portion of the detergent during the washing process are being developed.

European Patent Publication EP 3888521 A1 discloses a dishwasher including a detergent supply device that supplies a certain amount of detergent to a tub by pressurizing a tube.

However, the disclosed dishwasher has a structure in which the motor operating the pump is not easily detachable. Furthermore, in this structure, even when the pump stops, a problem may arise where a detergent leaks from the tube arranged vertically to a discharge port. Additionally, in this structure, there may be a problem where the detergent hardens in the tube arranged inside the pump. Furthermore, in this structure, a problem may arise where precise control of the pump by the motor is difficult.

In addition, there is a problem in that it is difficult to verify the amount of detergent discharged by the pump or whether the detergent is discharged.

### [Disclosure]

### [Technical Problem]

An object of the present disclosure is to provide a dishwasher capable of rapidly sensing locking of a pump.

Another object of the present disclosure is to provide a dishwasher capable of releasing locking of a pump when locking of the pump occurs. In addition, another object thereof is to provide a dishwasher capable of providing a notification to a user when the locking of the pump is not released.

Still another object of the present disclosure is to provide a dishwasher that prevents detergent present inside a pump from hardening.

Still another object of the present disclosure is to provide a dishwasher that smoothly supplies detergent to a tub.

Objects of the present disclosure are not limited to those mentioned above, and other unmentioned objects will be clearly understood by those skilled in the art from the description below.

### [Technical Solution]

In order to achieve the above-described objects, a dishwasher according to an embodiment of the present disclosure includes a tub forming a washing space in which dishes are placed and having one open side, a door disposed on one side of the tub and opens and closes the open side of the tub, and a detergent supply device that supplies detergent to the washing space. Moreover, the detergent supply device includes a detergent tank forming a storage space in which detergent is stored, a housing forming a mounting space where the detergent tank is mounted, a pump which is mounted on one side of the detergent tank and transfers the detergent stored in the storage space to the washing space, and a motor eon one side of the housing and operates the pump. Therefore, as the motor operates, the pump can supply detergent in the detergent tank to the tub. The pump includes a pump tube connected to the detergent tank so as to supply the detergent stored in the detergent tank to the washing space, a plurality of pressing rollers which are connected to the motor so as to rotate about a pump rotation shaft and which press one side of the pump tube, and a magnet which rotates about the pump rotation shaft, and a detection sensor disposed in the housing to sense the number of revolutions of the pump by sensing the magnet. Therefore, the detection sensor can sense the rotation of the pump.

Each of the plurality of pressing rollers is disposed circumferentially spaced apart from each other at a position radially outwardly spaced with respect to an axis of rotation on which the rotor rotates, and the magnet is disposed between the plurality of pressing rollers. Therefore, the magnet can rotate together with the pressing rollers.

The magnet is arranged on any one of the plurality of pressing rollers and can rotate together with the pressing roller.

The pump includes a rotor connected to the motor to rotate the plurality of pressing rollers and the magnet, the dishwasher further includes transmission gear that transmits a driving force of the motor to the pump, a gear groove to which one side of the transmission gear is connected is formed on one side of the rotor, and thus, the driving force of the motor can be transmitted to the rotor.

The detection sensor is disposed radially outward from the pump with respect to the pump rotation shaft. Therefore, the detection sensor can sense the rotation of the magnet when the pump rotates.

A control method for a dishwasher of the present disclosure includes operating a motor to move a pressing roller that pressurizes a pump tube connected to a detergent tank to supply detergent to a tub, thereby rotating a pump in a first direction, sensing, by a detection sensor, a magnet rotating together with the pressing roller to sense rotation of the pump in the first direction, and performing a pump locking release step of operating the motor to rotate the pump in a second direction opposite to the first direction when the rotation of the pump is not sensed by the detection sensor. Therefore, the locking of the pump can be released by verifying the locking of the pump.

The pump locking release step includes operating the motor to rotate the pump in the second direction, operating the motor to rotate the pump in the first direction, and sensing the rotation of the pump, thereby releasing locking of the pump and restoring the pump to a normal state.

The control further includes stopping the motor between the rotating of the pump in the second direction and the rotating of the pump in the first direction, thereby preventing occurrence of an excessive load on the motor.

A time required for the stopping of the motor may be set to be shorter than a time required for each of the rotating of the pump in the second direction and the rotating of the pump in the first direction.

When the rotation of the pump is not sensed in the pump locking release step, the rotating of the pump in the second direction and the rotating of the pump in the first direction are repeatedly performed, thereby releasing locking of the pump.

When the number of repetitions of rotating the pump in a reverse direction and rotating the pump in a forward direction exceeds a set number of times, an error is output to a user, thereby providing notification to the user.

A control method for a dishwasher of the present disclosure includes operating a motor to rotate a pump in a first direction to move a pressing roller which pressurizes a tube connected to a detergent tank and configured to supply detergent to a tub, sensing, by a detection sensor, a magnet rotating together with the pressing roller to sense rotation of the pump, and operating the motor such that the pump alternately rotates in a second direction opposite to the first direction and in the first direction when the rotation of the pump is not sensed by the detection sensor. Therefore, locking of the pump can be released by alternately rotating the pump.

The control method further includes sensing the rotation of the pump by the detection sensor after the pump rotates alternately, thereby providing notification to the user. A pump error can be output when the rotation of the pump is not sensed by the detection sensor.

Specific details of other embodiments are included in the detailed description and drawings.

### [Advantageous Effects]

According to the dishwasher of the present disclosure, there is one or more of the following effects.

First, by sensing the rotation of the pump through the magnet and the detection sensor, it is possible to sense that the pump is not operating when the rotation of the pump is sensed. This has the advantage of quickly sensing dishwasher malfunctions, ensuring smooth operation.

Second, by performing control to release the locking of the pump when the pump is locked, it has the advantage of quickly resolving pump issues caused by hardening of detergent.

Third, it has the advantage of preventing detergent hardening inside the pump through alternating operation of the pump or repeated forward and reverse rotations of the pump.

Effects of the present disclosure are not limited to those mentioned above, and other unmentioned effects will be clearly understood by those skilled in the art from the description in the claims.

### [Description of Drawings]

FIG. 1 is a view of a dishwasher with a door open according to one embodiment of the present disclosure.
FIG. 2 is a perspective view from one side of a part of the door in which a detergent supply device is arranged according to one embodiment of the present disclosure.
FIG. 3 is a perspective view from one side illustrating a state in which a detergent tank of the detergent supply device is separated according to one embodiment of the present disclosure.
FIG. 4 is a perspective view from the other side illustrating a state in which the detergent tank of the detergent supply device is separated according to one embodiment of the present disclosure.
FIG. 5 is an exploded perspective view of the detergent tank and a pump according to one embodiment of the present disclosure.
FIG. 6 is a front view of the detergent tank according to one embodiment of the present disclosure.
FIG. 7 is a rear perspective view of the detergent tank according to one embodiment of the present disclosure.
FIG. 8 is a perspective view of a cross section taken from one side of the detergent tank according to one embodiment of the present disclosure.
FIG. 9 is a diagram for explaining a flow path inside a connection port according to one embodiment of the present disclosure.
FIG. 10 is a rear perspective view illustrating a state in which the pump is mounted to the detergent tank according to one embodiment of the present disclosure.
FIG. 11 is a perspective view of the pump according to one embodiment of the present disclosure.
FIG. 12a is a view for explaining the internal structure of a pump according to one embodiment of the present disclosure.
FIG. 12b is a view for explaining the internal structure of a pump according to another embodiment of the present disclosure.
FIG. 13 is a view illustrating a state in which a transmission gear is inserted into the pump of FIG. 12a.
FIG. 14 is an exploded perspective view of a housing and a motor according to one embodiment of the present disclosure.
FIG. 15 is a perspective view for explaining the motor and the transmission gear according to one embodiment of the present disclosure.
FIG. 16 is a view illustrating a cross-section of a second gear of the transmission gear according to one embodiment of the present disclosure.
FIG. 17 is a perspective view for explaining a motor, a transmission gear, and a pump according to one embodiment of the present disclosure.
FIG. 18 is a cross-sectional view from one side for explaining the connection relationship or the like in a state where the detergent tank is mounted to a housing according to one embodiment of the present disclosure.
FIG. 19 is a perspective view of a cross-section taken from one side of the housing according to one embodiment of the present disclosure.
FIG. 20 is a cross-sectional view illustrating the separated state of the detergent tank and the housing in an area where a temperature sensor is arranged according to one embodiment of the present disclosure.
FIG. 21 is a cross-sectional view illustrating the state in which the detergent tank is mounted to the housing in the area where the temperature sensor is arranged according to one embodiment of the present disclosure.
FIG. 22 is a block diagram illustrating a control unit and configurations related thereto according to one embodiment of the present disclosure.
FIG. 23 is a diagram illustrating the operation of a pump according to the operation of a motor of the dishwasher according to the present disclosure as a signal.
FIG. 24 is a control method for a dishwasher that senses the rotation of a pump according to the rotation of a motor according to one embodiment of the present disclosure.
FIG. 25 is a flowchart illustrating a control method for a dishwasher in a case of a malfunction of the pump according to one embodiment of the present disclosure.
FIG. 26 is a flowchart illustrating a control method for a dishwasher that releases the locking of the pump according to one embodiment of the present disclosure.

### [Mode for Invention]

The advantages and features of the present disclosure and the methods for achieving them will become clear by referring to the embodiments described below in detail together with the accompanying drawings. However, the present disclosure is not limited to the embodiments disclosed below and may be implemented in various different forms. The embodiments are provided only to make the disclosure of the present disclosure complete and to fully inform those skilled in the art to which the present disclosure pertains of the scope of the invention, and the present disclosure is defined only by the scope of the claims. Throughout the specification, the same reference numerals refer to the same components.

Hereafter, the present disclosure will be described with reference to the drawings for explaining a dishwasher according to the embodiments of the present disclosure.

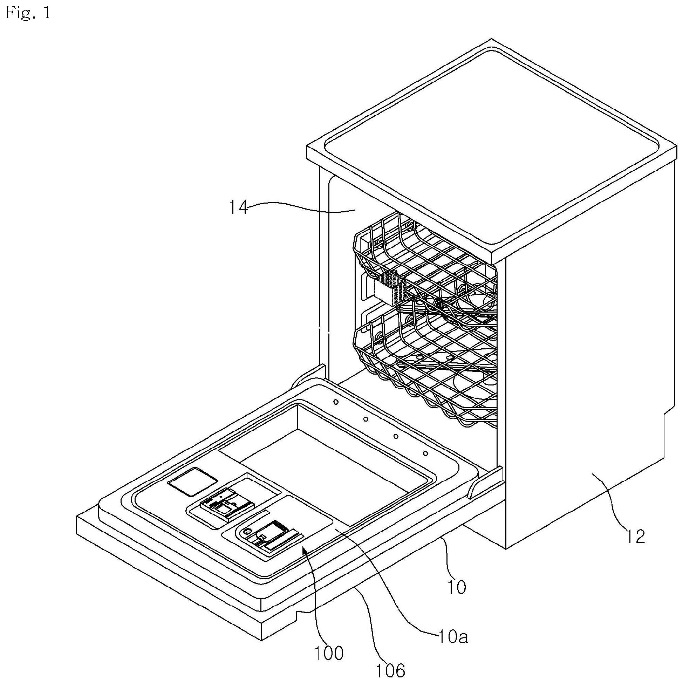

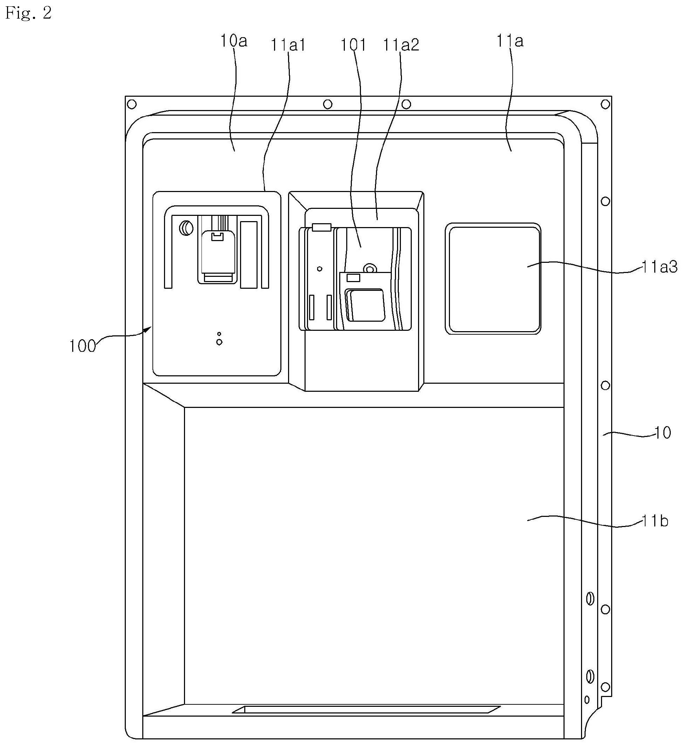

With reference to FIGS. 1 and 2, the overall configuration of a dishwasher and a detergent supply device 100 will be described.

The dishwasher includes a cabinet 12 that forms an outer shape and an inner washing space, a door 10 that opens and closes one open side of the cabinet 12, and a detergent supply device 100 (or "first detergent supply device") that is arranged on inside the door 10 and supplies a detergent to the washing space.

The dishwasher may include a tub 14 that forms a space for washing dishes, a sump (not illustrated) that is arranged below the tub and stores washing water, and a pump (not illustrated) that supplies the washing water stored in the sump to the tub. Additionally, the dishwasher may include a spray arm (not illustrated) that is arranged inside the tub 14 and sprays washing water into the washing space.

The door 10 includes an outer door 10b and an inner door 10a. The outer door 10b is arranged so as to be exposed to the outside when the door 10 closes one side of the cabinet 12. The inner door 10a may be arranged to face the washing space of the tub 14 when the door 10 closes one side of the cabinet 12.

A spaced space may be formed between the inner door 10a and the outer door 10b. The wall surface formed by the inner door 10a and the wall surface formed by the outer door 10b may be arranged spaced apart from each other.

Referring to FIG. 2, the inner door 10a includes a protrusion 11a where the detergent supply device 100 is arranged, and a recessed portion 11b arranged below the protrusion 11a and forming a groove in the direction in which the outer door 10b is arranged.

The inner door 10a includes a protrusion 11a where a housing 200 is arranged, and a recessed portion 11b arranged closer to the outer door 10b than the protrusion 11a.

The recessed portion 11b may secure a washing space for the tub 14. Accordingly, an area occupied by dishes arranged in the washing space may be more widely secured.

The protrusion 11a may form a surface that protrudes toward the tub 14 relative to the recessed portion 11b. Therefore, the detergent supply device 100 may be arranged in the protrusion 11a.

The protrusion 11a includes a first installation portion 11a1 in which the detergent supply device 100 is arranged. The protrusion 11a may include a second installation portion 11a2 arranged on one side of the first installation portion 11a1. The protrusion 11a may include a third installation portion 11a3 arranged on one side of the first installation portion 11a1 or the second installation portion 11a2.

The detergent supply device 100 is arranged in the first installation portion 11a1. The second installation portion 11a2 is arranged on one side of the first installation portion 11a1 and may be arranged spaced apart from the first installation portion 11a1 in the direction of the outer door 10b. A second detergent supply device 101 may be arranged in the second installation portion 11a2. The second detergent supply device 101 may be arranged protruding from the second installation portion 11a2.

The second detergent supply device 101 in which a device door 101a is opened during the operation of the dishwasher may be arranged in the protrusion 11a. The second detergent supply device 101 may be a detergent supply device that supplies a certain amount of detergent before the operation of the dishwasher and discharges the detergent stored inside when the device door 10 is opened during the operation of the dishwasher. The second detergent supply device 101 may not be a structure in which the entire structure is inserted into the space between the inner door 10a and the outer door 10b. Therefore, a portion of the second detergent supply device 101 may have a structure that protrudes into the inner side of the tub 14. However, the second installation portion 11a2 may form a surface recessed relative to the surface formed by the protrusion 11a to minimize the portion of the second detergent supply device 101 that protrudes into the inner space of the tub 14.

The third installation portion 11a3 may be arranged on one side of the second installation portion 11a2. The third installation portion 11a3 may also form a surface spaced apart in the direction in which the outer door 10b is arranged. However, the third installation portion 11a3 may be arranged closer to the direction in which the tub 14 is arranged than the second installation portion 11a2.

Although not illustrated in the drawings, an additional detergent supply device (not illustrated) may be arranged in the third installation portion. The additional detergent supply device may be a detergent supply device having a configuration similar to that of the second detergent supply device 101. In the third installation portion 11a3, an additional detergent supply device may be arranged in a structure into which it is inserted. The second installation portion 11a2 and the third installation portion 11a3, where the additional detergent supply device is installed, may be arranged closer to the outer door 10b than the surface formed by the protrusion 11a.

Referring to FIG. 2, the detergent supply device 100 is arranged on the inside of the door 10. Accordingly, the detergent discharged from the detergent supply device (20) may be introduced into the washing space formed inside the cabinet 12. However, as another embodiment, the detergent supply device 100 may be arranged at another portion inside the cabinet 12 rather than on the door 10. That is, it is also possible for the detergent supply device 100 to be arranged on one side of the tub.

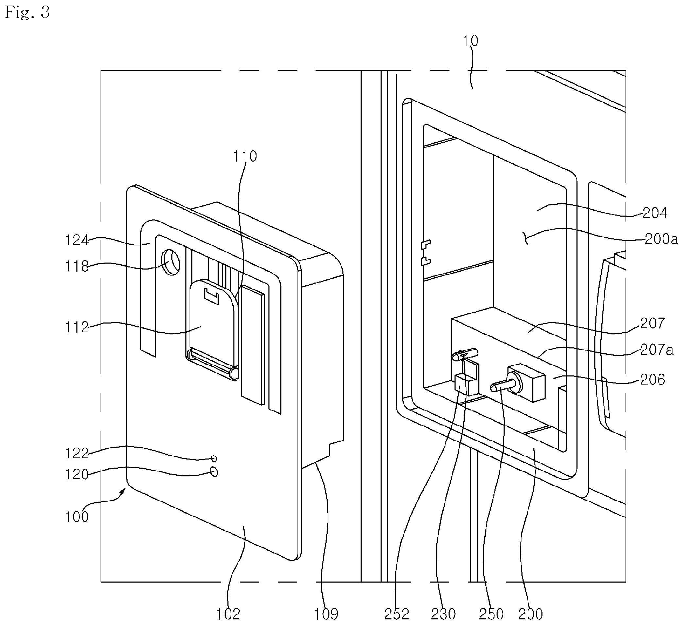

Referring to FIG. 3, a detergent tank 102 and the housing 200 of the detergent supply device 100 will be described.

The detergent supply device 100 includes the detergent tank 102 that forms a storage space 103 in which detergent is stored, and the housing 200 on which the detergent tank 102 is mounted. The housing 200 may be arranged on one side of the door 10.

The detergent tank 102 forms the storage space 103 in which detergent is stored. An inlet 110 for injecting detergent into the storage space 103 is formed on one side of the detergent tank 102. An inlet cover 112 for opening and closing the inlet 110 is arranged on one side of the detergent tank 102. The inlet cover 112 may be hinge-fixed to one side of the detergent tank 102.

A handle 124 may be arranged on one side of the detergent tank 102. The handle 124 may be rotatably arranged on one side of the detergent tank 102. A discharge port 122 through which the detergent stored in the storage space 103 is discharged is formed on one side of the detergent tank 102. The discharge port 122 is arranged below the inlet 110.

A sensor cover 120 is arranged on one side of the detergent tank 102. The sensor cover 120 prevents a temperature sensor 250, which will be described below, from being exposed to the outside. The sensor cover 120 is arranged below the discharge port 122. The sensor cover 120 may have a structure that protrudes from the detergent tank 102.

A communication hole 118 may be formed on one side of the detergent tank 102. The communication hole 118 may be arranged above the inlet 110.

The housing 200 may form a mounting space 200a in which the detergent tank 102 is mounted. The detergent tank 102 is inserted into the mounting space 200a formed in the housing 200.

The mounting space 200a may be formed in a shape corresponding to the portion on which the detergent tank 102 is mounted.

A transmission gear 230 that transmits power to a pump 160, which will be described below, is arranged to protrude in the housing 200. Therefore, when the detergent tank 102 is mounted to the housing 200, one side of the transmission gear 230 can be inserted into the pump 160.

The temperature sensor 250 is arranged to protrude in the housing 200. Therefore, when the detergent tank 102 is mounted to the housing 200, the temperature sensor 250 may be inserted into one side of the detergent tank 102.

A detection sensor 252 for sensing the operation of the pump 160, which will be described below, is arranged in the housing 200. The detection sensor 252 may be arranged at the rear of the housing 200. The detection sensor 252 may be arranged so as to protrude in the direction in which the detergent tank 102 is mounted.

A stepped portion 207 is formed in the housing 200. The housing 200 includes a first housing body 204 that forms a space in which a first tank body 106, which will be described below, is arranged, and a second housing body 206 that forms a space in which a second tank body 108, which will be described below, is arranged. The stepped portion 207 is formed between the first housing body 204 and the second housing body 206.

The housing 200 includes the first housing body 204, the second housing body 206 arranged on one side of the first housing body 204, and the stepped portion 207 partitioning the first housing body 204 and the second housing body 206.

The detergent tank 102 also has a stepped portion 109 corresponding to the stepped portion 207 of the housing 200. In the detergent tank 102, the corresponding stepped portion 109 is formed due to the height difference between the first tank body 106 and the second tank body 108 protruding inward from the door 10.

When the detergent tank 102 is inserted into the housing 200, the corresponding stepped portion 109 of the detergent tank 102 may be arranged to catch on the stepped portion 207 of the housing 200. The above structure can prevent the detergent tank 102 mounted to the housing 200 from moving or shaking inside the housing 200.

The structure of the stepped portion 207 of the housing 200 can maintain the stable positioning of the temperature sensor 250, the transmission gear 230, and a detection sensor mounting portion 210 protruding from the housing 200.

In addition, the stepped portion 207 may guide the detergent tank 102 inserted into the housing 200. The stepped portion 207 may guide the temperature sensor 250, the transmitter 230, and the detection sensor mounting portion 210 to be inserted into the correct position of the detergent tank 102.

Accordingly, it is possible to prevent the temperature sensor 250, the transmitter 230, and the detection sensor mounting portion 210 from being damaged by movement caused by external influences during the insertion process of the detergent tank 102 or in a state the detergent tank is inserted.

An end portion 207a of the stepped portion 207 may be arranged between the surface formed by the protrusion 11a and the surface formed by the recessed portion 11b.

The end portion 207a of the stepped portion 207 may be arranged to protrude outward relative to the surface formed by the recessed portion 11b. Additionally, the end portion 207a of the stepped portion 207 may be arranged inward relative to the surface formed by the protrusion 11a. Here, the end portion 207a of the stepped portion 207 may refer to the end of the portion where the stepped portion 207 protrudes. Here, the outer side may refer to the direction in which the inner door 10a is arranged relative to the outer door 10b, and the inner side may refer to the direction opposite to the outer side.

The stepped portion 207 may form a stepped structure toward the upper side inside the housing 200 and perform the function of supporting a portion of the load of the detergent tank 102. Therefore, even when multiple components are arranged in the detergent tank 102, the structural stability of the detergent tank 102 mounted to the housing 200 can be increased because the stepped portion 207 supports a portion of the load.

A device that senses the detergent tank 102 or is linked to the detergent tank 102 may be arranged in the second housing body 206. A device that senses the pump 160 or is linked to the pump 160 may be arranged in the second housing body 206.

The device may be the detection sensor 252, the temperature sensor 250, and the transmission gear 230 to be described below. The device may be arranged so as to protrude from the second housing body 206 into the area in which the detergent tank 102 is arranged.

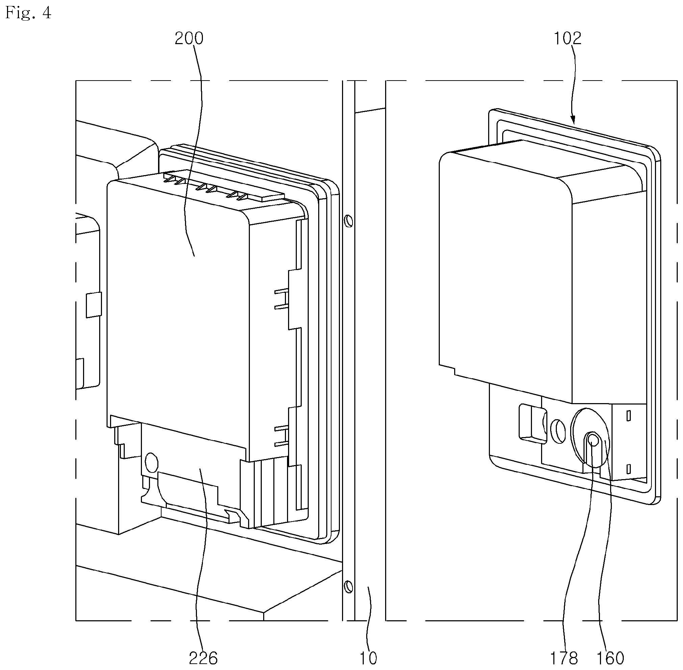

With reference to FIG. 4, the detergent tank 102 and the housing 200 of the detergent supply device 100 will be described.

The pump 160 is arranged on one side of the detergent tank 102. The pump 160 may be mounted to the housing 200 in a state combined with the detergent tank 102.

A gear groove 178 into which the transmission gear 230 arranged in the housing 200 is inserted is formed in the pump 160.

The housing 200 is fixedly arranged on one side of the door 10. The housing 200 may be fixedly arranged on the inner wall of the door 10. The housing 200 may be detachably arranged from the inner wall of the door 10. The inner wall of the door 10 may refer to one wall of the door that is arranged to face the tub 14 when the door 10 is closed.

A motor 220 and a motor cover 226 covering the motor 220 may be arranged on one side of the housing 200. The motor cover 226 is arranged on the lower side of the housing 200. The motor 220 and t transmission gear 230 are arranged on the lower side of the housing 200. The motor cover 226 may fix the positions of the motor 220 and the transmission gear 230 arranged on the lower side of the housing 200.

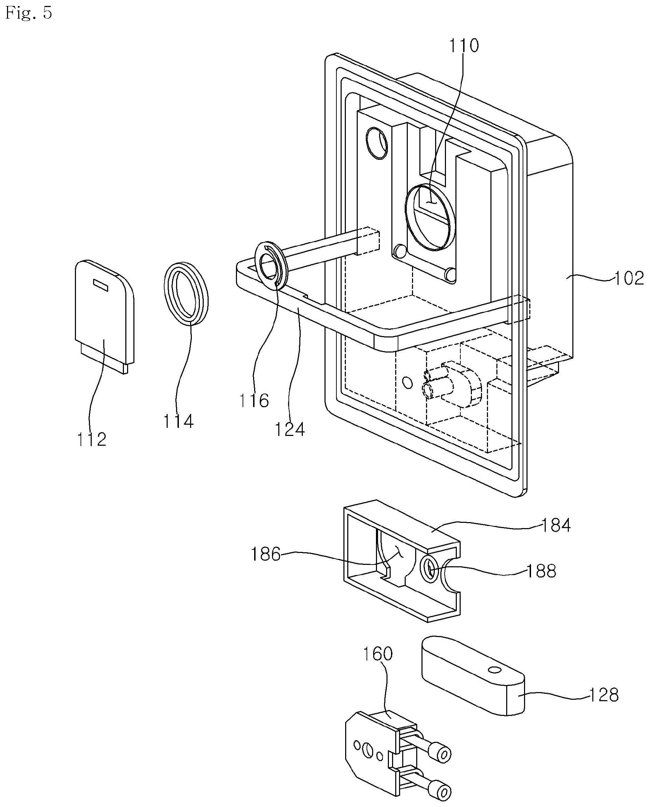

Referring to FIG. 5, the configurations of the detergent tank 102 and the pump 160 will be described.

The inlet 110 and the discharge port 122 are formed in a first wall 104 arranged in front of the detergent tank 102. The inlet cover 112 is arranged at the inlet 110. The inlet cover 112 is provided with a cover louver 114 and a cover cap 116. The cover louver 114 may seal the space between the inlet 110 and the inlet cover 112. The cover cap 116 may secure the cover louver 114 to the inlet cover 112.

A floater 128 may be arranged inside the detergent tank 102. The floater 128 may move up and down depending on the amount of detergent stored inside the detergent tank 102. The level of the detergent in the storage space 103 according to the position of the floater 128 may be checked through a separate water level sensor (not illustrated).

The pump 160 is arranged on one side of the detergent tank 102. The pump 160 may transfer the detergent stored in the detergent tank 102 to the washing space of the tub 14. The pump 160 is fixedly arranged on one side of the detergent tank 102. The pump 160 is mounted to the housing 200 together with the detergent tank 102.

When the detergent tank 102 and the pump 160 are mounted to the housing 200, the pump is connected to the motor 220 that operates the pump 160.

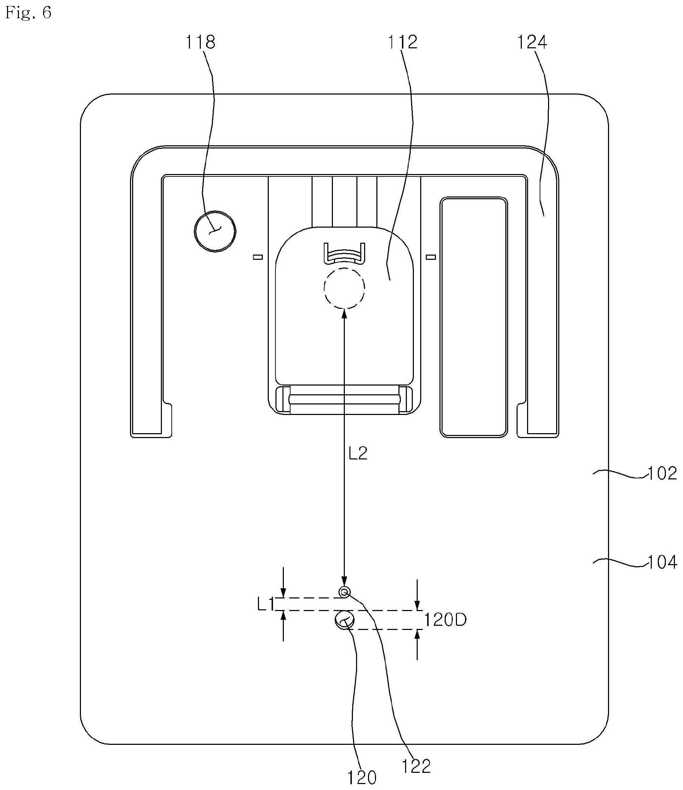

Referring to FIG. 6, the front portion of the detergent tank 102 will be described.

The first wall 104 is arranged in the direction exposed from the detergent tank 102 toward the tub 14. The first wall 104 forms a surface exposed to the outside in a state where the detergent tank 102 is mounted in the housing 200.

The first wall 104 may be arranged to face the washing space inside the tub 14 in a state where the door 10 is closed.

The handle 124 is arranged on the first wall 104. The handle 124 is rotatably arranged on the first wall 104. A user may detach the detergent tank 102 from the housing 200 through the handle 124.

The communication hole 118 is formed in the first wall 104. The communication hole 118 is arranged above the inlet 110.

The inlet 110 and the inlet cover 112 covering the inlet 110 are arranged on the first wall 104. The inlet 110 is arranged above the discharge port 122. The inlet cover 112 is rotatably arranged on the first wall 104. The inlet cover 112 may open and close the inlet 110. The user may open the inlet 110 and inject detergent into the inlet 110.

The discharge port 122 may be formed in the first wall 104. The discharge port 122 is arranged below the inlet 110. The discharge port 122 may be arranged at a certain distance upward from the lower end of the first wall 104.

The sensor cover 120 covering the temperature sensor 250, which will be described below, is arranged in the first wall 104. The sensor cover 120 is arranged below the discharge port 122. The sensor cover 120 is arranged below the discharge port 122 in an up-down direction. Therefore, the detergent discharged from the discharge port 122 may fall along the first wall 104 and pass through the sensor cover 120.

As the detergent discharged from the discharge port 122 passes through the sensor cover 120, the temperature sensor 250 may sense a temperature change.

The sensor cover 120 may be formed of a thermally conductive material. Therefore, a temperature change due to the detergent in contact with the sensor cover 120 may be quickly sensed. The sensor cover 120 may be made of a metal material with high thermal conductivity. The sensor cover 120 may be formed of a material such as iron or aluminum with high thermal conductivity.

The sensor cover 120 may be arranged to protrude forward from the first wall 104. The sensor cover 120 may have a shape that is convex forward.

A spacing L1 between the sensor cover 120 and the discharge port 122 in the up-down direction may be formed to be smaller than a spacing L2 between the inlet 110 and the discharge port 122. The spacing L1 between the sensor cover 120 and the discharge port 122 may be formed to a size between 0.5 times and 2 times a diameter 120D of the sensor cover 120.

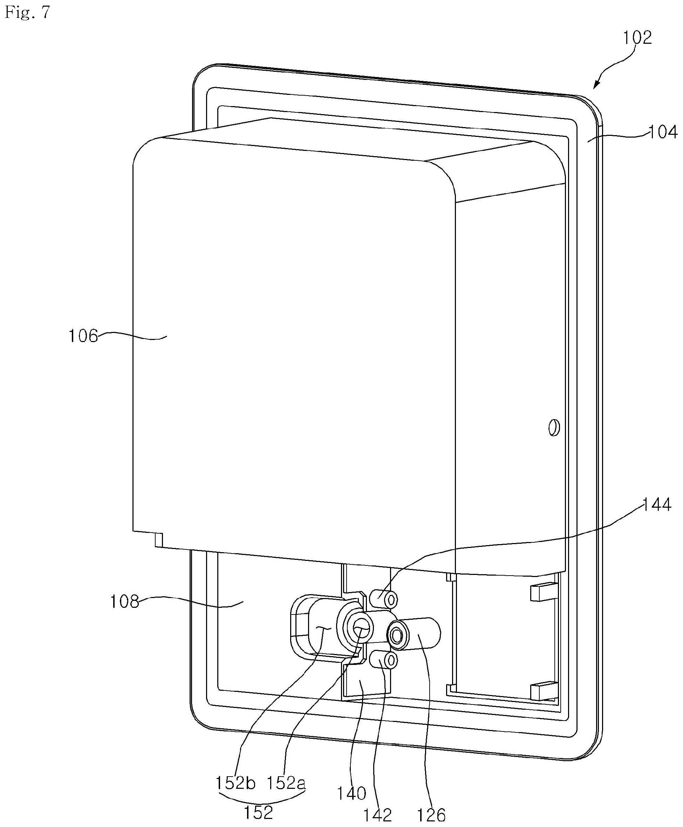

Referring to FIG. 7, the rear portion of the detergent tank 102 will be described.

The detergent tank 102 includes tank bodies 106 and 108 that protrudes rearward from the first wall 104 to form the storage space 103. The tank body includes the first tank body 106 and the second tank body 108 arranged below the first tank body 106.

The first tank body 106 is arranged above the second tank body 108. The first tank body 106 has a structure that protrudes rearward relative to the second tank body 108.

The length formed by the second tank body 108 in the left-right direction is formed to be smaller than the length formed by the first tank body 106 in the left-right direction. The length formed by the second tank body 108 in the up-down direction is formed to be smaller than the length formed by the first tank body 106 in the up-down direction. The length formed by the second tank body 108 in the front-back direction is formed to be smaller than the length formed by the first tank body 106 in the front-back direction.

The second tank body 108 forms a storage space smaller than that of the first tank body 106. The pump 160 is connected to one side of the second tank body 108. A space for the pump 160 is formed on one side of the second tank body 108.

The second tank body 108 includes a connection port 140 to which the pump 160 is connected.

The connection port 140 is configured with an inlet port 142 connected to one side of the pump 160 and an outlet port 144 connected to the other side of the pump 160. The inlet port 142 connects the inside of the detergent tank 102 and the pump 160. The outlet port 144 connects the pump 160 and the discharge port 122.

The inlet port 142 is arranged below the outlet port 144. Each of the inlet port 142 and the outlet port 144 is arranged to protrude in the direction in which the pump 160 is arranged. The inlet port 142 is connected to an inlet tube 170 of the pump 160 to be described below.

The outlet port 144 transfers the detergent flowing from the pump 160 to the tub 14 through the discharge port 122. The outlet port 144 is connected to an outlet tube 172 of the pump 160 to be described below.

An inlet flow path 146 that connects the pump 160 and the storage space 103 may be formed inside the connection port 140. An outlet flow path 148 that connects the pump 160 and the outside of the detergent tank 102 may be formed inside the connection port 140.

A sensor groove 152 into which the temperature sensor 250 is inserted is formed in the connection port 140. The sensor groove 152 may be arranged between the inlet port 142 and the outlet port 144 in the up-down direction. The sensor groove 152 may be formed in the front-rear direction.

The sensor groove 152 includes a first sensor groove 152a into which the temperature sensor 250 is inserted, and a second sensor groove 152b into which a sensor mounting portion 208 surrounding a portion of the temperature sensor 250, which will be described below, is inserted. The second sensor groove 152b may be formed larger than the first sensor groove 152a.

The first sensor groove 152a may be formed inwardly at the location where the second sensor groove 152b is formed.

A fastening boss 126 to which the pump 160 or a pump cover 184 is fastened may be arranged on one side of the rear of the first wall 104.

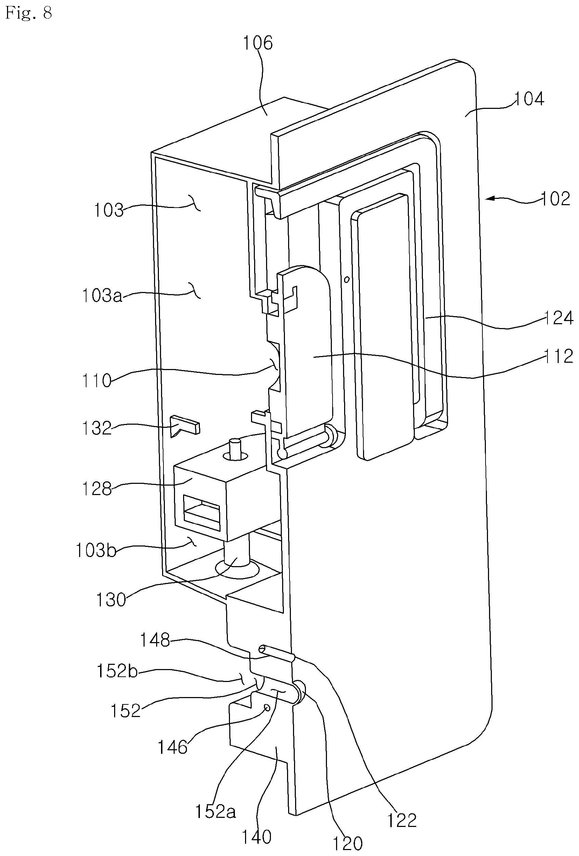

Referring to FIG. 8, the internal configuration of the detergent tank 102 and the interior of the connection port 140 will be described.

The floater 128 is arranged inside the detergent tank 102. The floater 128 may move up and down depending on the amount of detergent stored inside the storage space 103. The interior of the floater 128 may be formed as a hollow space.

A guide bar 130 formed in the up-down direction may be arranged inside the detergent tank 102 to guide the movement of the floater 128. A guide projection 132 that restricts the upward movement of the floater 128 may be arranged inside the detergent tank 102.

The interior of the first tank body 106 is divided into an inlet area 103a where the inlet 110 is formed and a water level checking area 103b where the floater 128 is arranged. A storage space inside the second tank body 108 is formed on one side of the area where the connection port 140 is arranged. A discharge area 103c connected to the pump 160 is formed inside the second tank body 108 below the water level checking area.

The inlet flow path 146 and the outlet flow path 148 are formed in the connection port 140. The outlet flow path 148 is bent and extended forward. The outlet flow path 148 leads to the discharge port 122 located at the front.

The outlet flow path 148 is arranged above the inlet flow path 146. The sensor groove 152 is arranged between the outlet flow path 148 and the inlet flow path 146. The sensor cover 120 is arranged in front of the sensor groove 152. The sensor cover 120 may have a shape that protrudes forward. The sensor cover 120 is arranged below the discharge port 122.

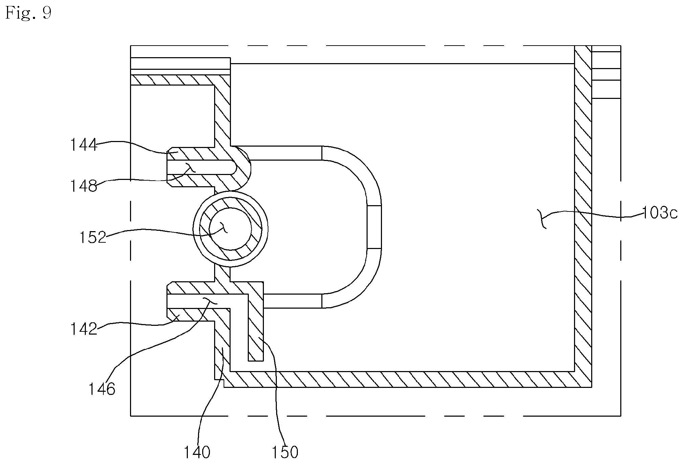

Referring to FIG. 9, the structure of the inlet flow path 146 will be described.

The connection port 140 is arranged on one side of the space formed by the second tank body 108. The inlet port 142 and the outlet port 144 are arranged in the connection port 140 to protrude in the direction in which the pump 160 is arranged. The inlet flow path 146 may be formed inside the inlet port 142. The outflow flow path 148 may be formed inside the outlet port 144.

An inner pipe 150 is arranged inside the second tank body 108. The inner pipe 150 extends from the connection port 140 to the inner side and lower side of the second tank body 108. Accordingly, the detergent present in the lower area of the second tank body 108 may be discharged by the pump 160.

The inlet flow path extends into the interior of the inner pipe 150. Therefore, the inlet flow path 146 has a structure that bends downward from the interior of the second tank body 108.

The sensor groove 152 into which the temperature sensor 250 is inserted is formed in the second tank body 108. The sensor groove 152 is arranged between the inlet flow path 146 and the outlet flow path 148 in the up-down direction.

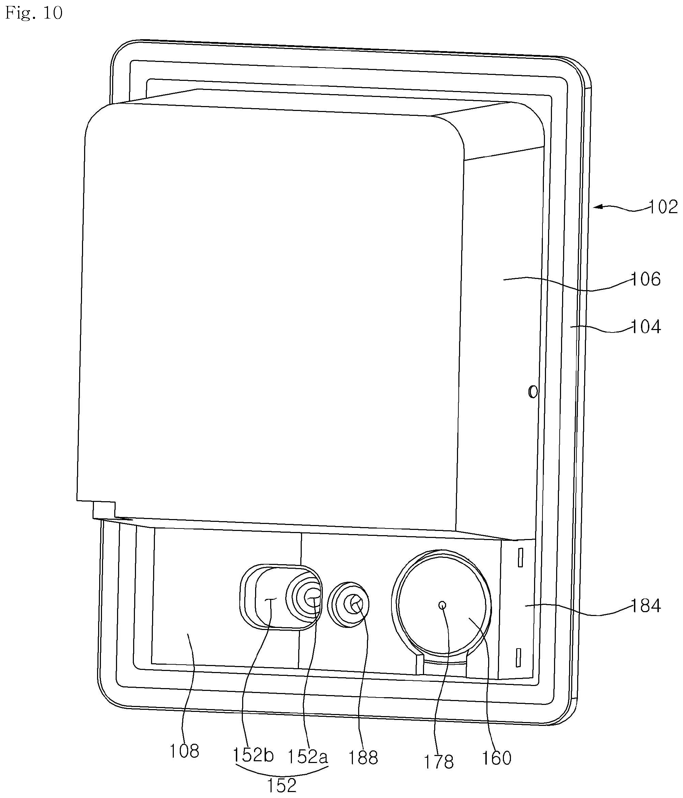

Referring to FIG. 10, the pump 160 and the pump cover 184 mounted to the detergent tank 102 will be described.

The pump 160 is arranged on one side of the detergent tank 102. The pump 160 is connected to the detergent tank 102 and transfers the detergent stored in the detergent tank 102 to the tub 14.

The pump 160 is formed with the gear groove 178 into which the transmission gear 230 is inserted on the rear surface of the pump. The pump 160 is formed with the detection sensor groove 152 in which the detection sensor 252 for sensing operation of the pump 160 is arranged.

The pump cover 184 may fix the position of the pump 160. The pump cover 184 is arranged so as to be fixed to the detergent tank 102. A fastening hole 188 is formed in the pump cover 184 to be fastened to the detergent tank 102 by a separate fastening means.

A pump hole 186 is formed in the pump cover 184 so that one side of the pump 160 is exposed.

In a state where the pump 160 and the pump cover 184 are mounted to the detergent tank 102, the pump cover 184 may form a surface identical to that of the second tank body 108.

The length of the second tank body 108 protruding rearward from the first wall 104 may be formed to be equal to the length of the pump cover 184 mounted to the detergent tank 102 protruding rearward from the first wall 104.

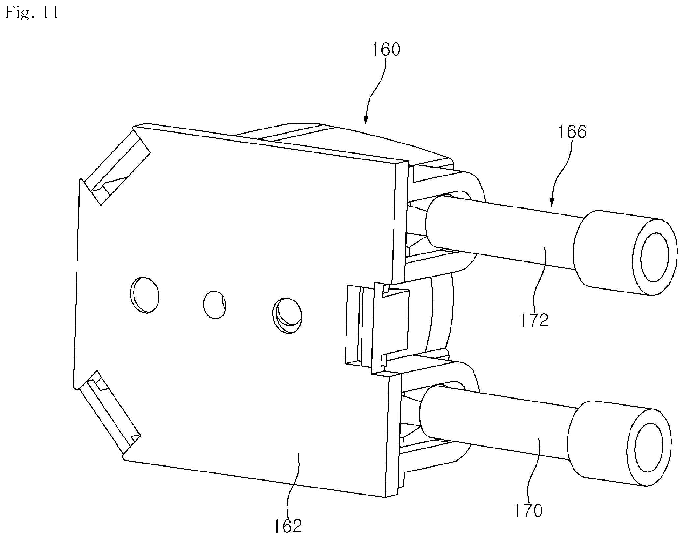

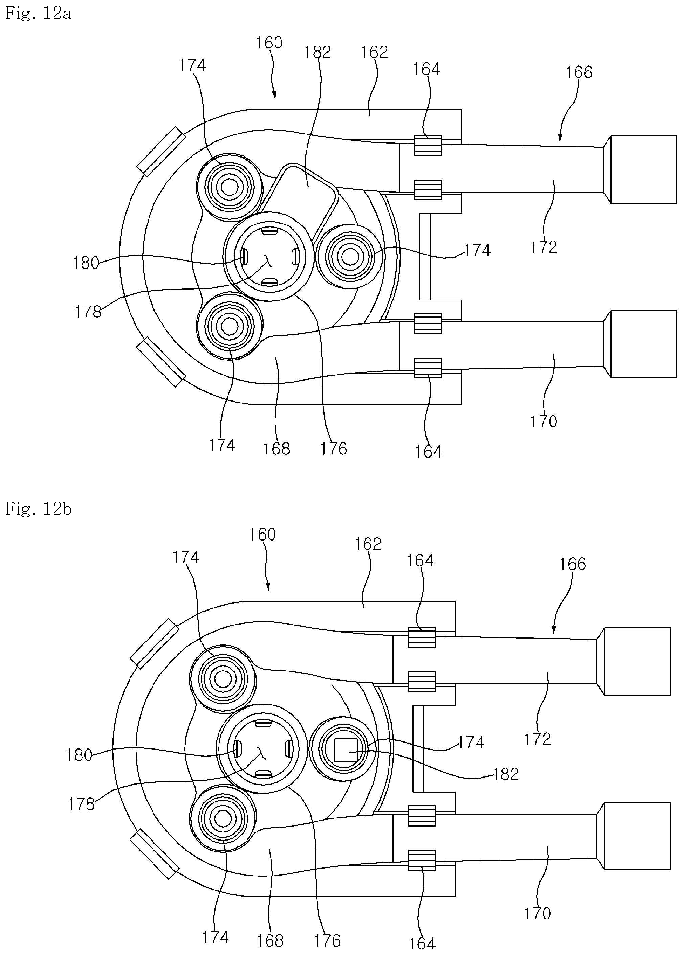

The pump 160 will be described with reference to FIGS. 11, 12a, and 12b.

The pump 160 includes a pump tube 166 connected to the detergent tank 102 and a plurality of pressing rollers 174 that pressurize and rotate the pump tube 166. The pump 160 includes a rotor 176 that rotates the plurality of pressing rollers 174. The pump 160 includes a pump housing 162 that fixes the arrangement of the pump tube 166.

The rotor 176 is rotatably arranged in the pump housing 162. The rotor 176 is formed with the gear groove 178 into which the transmission gear 230 is inserted. The rotor 176 has a plurality of inner protrusions 180 arranged on the inner peripheral surface where the gear groove 178 is formed. The plurality of inner protrusions 180 are arranged spaced apart in the circumferential direction. Each of the plurality of inner protrusions 180 may have a hemispherical shape.

The rotor 176 rotates in connection with the transmission gear 230. The rotor 176 rotates the plurality of pressing rollers 174.

The pump 160 includes a magnet 182 that rotates by the rotor 176. The magnet 182 may be arranged between the plurality of pressing rollers 174 as illustrated in FIG. 12a. Moreover, as illustrated in FIG. 12b, the magnet may be arranged on any one of the plurality of pressing rollers 174.

The magnet 182 rotates together with the pressing rollers 174.

The pump housing 162 fixes the pump tube 166. A fixing protrusion 164 protruding to fix one side of the pump tube 166 is arranged on the pump housing 162.

The pump tube 166 is connected to one side of the detergent tank 102. The pump tube 166 is connected to the inlet port 142 on one side and to the outlet port 144 on the other side.

The pump tube 166 includes an extrusion tube 168 arranged in an area in contact with the plurality of pressing rollers 174, an inlet tube connected to each of one side of the extrusion tube 168 and the inlet port 142 of the detergent tank 102, and an outlet tube 172 connected to each of the other side of the extrusion tube 168 and the outlet port 144 of the detergent tank 102.

The extrusion tube 168 may have a bent shape. The extrusion tube 168 is arranged inside the pump housing 162.

The outlet tube 172 is arranged above the inlet tube 170. The outlet tube 172 is arranged parallel to the ground. Therefore, even when the operation of the pump 160 is stopped, the detergent arranged in the outlet tube 172 is not discharged to the discharge port.

The inner diameter of the pump tube 166 may be formed to be 1 mm or more and 5 mm or less. When the inner diameter of the pump tube 166 is less than 1 mm, the amount of detergent discharged through the pump 160 may be formed to be very small. Moreover, when the inner diameter of the pump tube 166 is less than 1 mm, the detergent arranged inside the pump tube 166 may harden quickly.

Additionally, when the outer diameter of the pump tube 166 exceeds 5mm, a problem may occur in which the pressing roller 174 does not operate when the detergent arranged inside the pump tube 166 hardens.

The outer diameter of the pump tube 166 may be formed to be 10mm or less. When the outer diameter of the pump tube 166 exceeds 10mm, the inner diameter of the pump tube 166 may exceed 5mm. Moreover, when the outer diameter of the pump tube 166 exceeds 10mm, in a case where the inner diameter of the pump tube 166 does not exceed 5mm, a problem may occur in which the thickness of the pump tube 166 becomes too thick, making it impossible to smoothly apply pressure by the pressing roller 174.

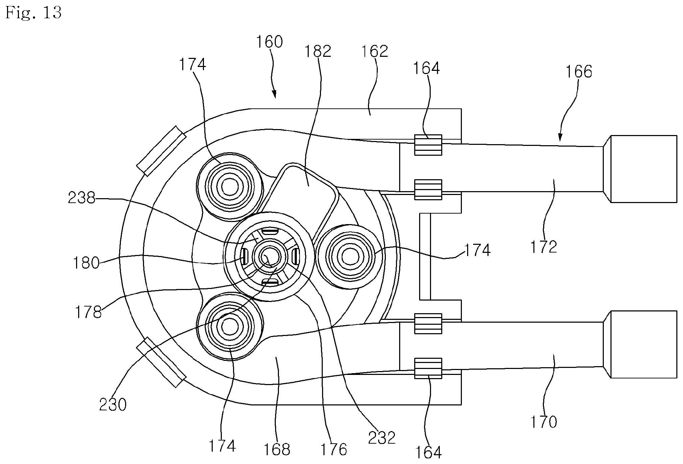

Referring to FIG. 13, a state in which the transmission gear 230 is mounted to the gear groove 178 will be described.

When the detergent tank 102 is mounted to the housing 200, one side of the transmission gear 230 is inserted into the gear groove 178.

A second gear 236 of the transmission gear 230, which will be described below, is arranged between the plurality of inner protrusions 180. The plurality of outer protrusions 238 formed by the second gear 236 may have a structure that protrudes radially outward from the transmission gear shaft 232 formed by the transmission gear 230.

The thickness of each of the plurality of outer protrusions 238 is formed to be smaller than the spacing between each of the plurality of inner protrusions 180. When the detergent tank 102 is mounted to the housing 200, the plurality of outer protrusions 238 may be naturally arranged between the plurality of inner protrusions 180.

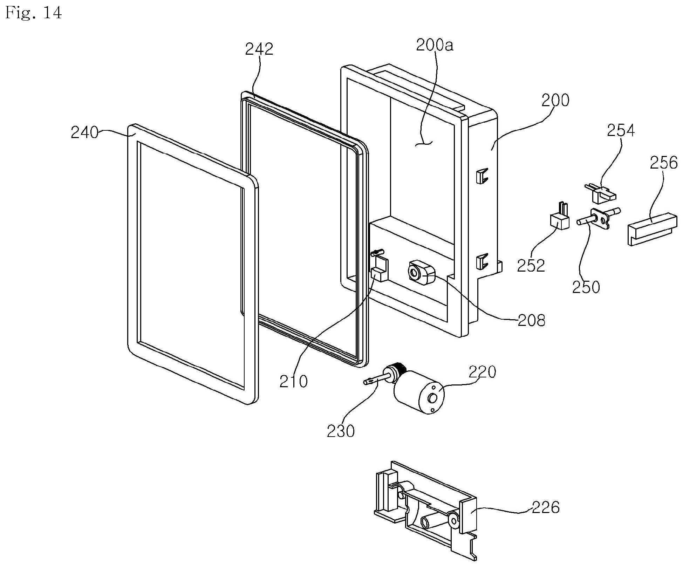

Referring to FIG. 14, the configurations of the housing 200 and the motor 220 will be described.

The housing 200 may be mounted to the door 10.

The housing 200 forms the mounting space 200a in which the detergent tank 102 is mounted. The housing 200 may have a structure corresponding to the shape of the first tank body 106 and the second tank body 108 of the detergent tank 102.

A first sealer 240 that seals the space between the housing 200 and the detergent tank 102 may be arranged on one side of the housing 200. A second sealer 242 that seals the space between the housing 200 and the door 10 may be arranged on the other side of the housing 200.

The temperature sensor 250 for sensing the temperature of the detergent discharged from the discharge port 122 is arranged in the housing 200.

The detection sensor 252 for sensing the rotation of the rotor 176 when the pump 160 is operated is arranged in the housing 200. The detection sensor 252 may use a Hall sensor that senses the magnet 182.

A water level sensor 254 for checking the position of the floater 128 may be arranged in the housing 200. The water level sensor 254 may sense the water level of the detergent tank 102 by checking the distance between the water level sensor and the floater 128 which is arranged in the detergent tank 102.

A mounting detection sensor 256 for sensing whether the detergent tank 102 is mounted may be arranged in the housing 200. A magnet (not illustrated) may be arranged inside the detergent tank 102. Accordingly, by sensing the magnet arranged in the detergent tank 102, the mounting detection sensor 256 may sense whether the detergent tank 102 is mounted.

The motor 220, the transmission gear 230, and the motor cover 226 are arranged on one side of the housing 200. The motor 220 is arranged in a direction perpendicular to the transmission gear 230. The motor cover 226 places the motor 220 on one side of the housing 200.

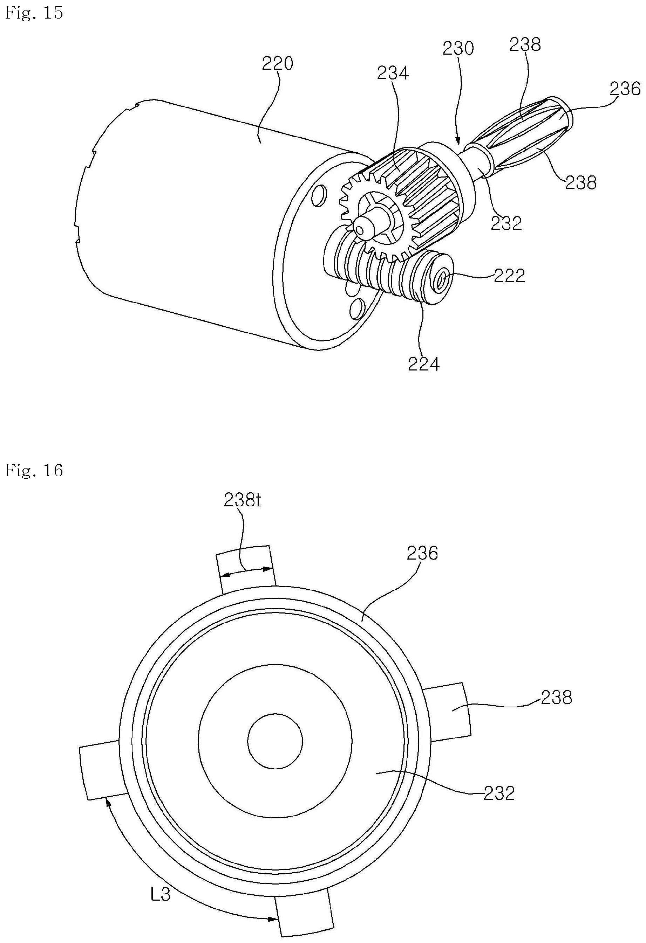

Referring to FIGS. 15 and 16, the configurations of the motor 220 and the transmission gear 230 will be explained.

The motor 220 rotates a motor shaft 222 by driving. A motor gear 224 protruding in a screw shape is arranged on the outer circumference of the motor shaft 222. The motor gear 224 may have the form of a worm gear.

The motor shaft 222 is arranged to extend in the left-right direction. Accordingly, the space occupied by the motor 220, which has a cylindrical shape, in the front-rear direction can be minimized.

The transmission gear 230 includes the transmission gear shaft 232 arranged perpendicular to the motor shaft 222, a first gear 234 arranged on one side of the transmission gear shaft 232 and meshing with the motor gear 224, and the second gear 236 arranged on the other side of the transmission gear shaft 232 and rotating the rotor 176.

The transmission gear 230 is arranged above the motor shaft 222. Unlike the drawings, the transmission gear 230 may be arranged below the motor shaft 222.

The first gear 234 is arranged to mesh with the motor gear 224. The first gear 234 may mesh with the motor gear 224 to convert the driving force from the motor 220 into a vertical direction.

The second gear 236 may be inserted into the gear groove 178 formed in the pump 160. The second gear 236 has the plurality of outer protrusions 238 arranged on the outer circumferential surface of the transmission gear shaft 232 and spaced apart in the circumferential direction.

The number of the plurality of outer protrusions 238 may be formed to be equal to the number of the plurality of inner protrusions 180 arranged on the rotor 176. Referring to FIG. 16, a thickness 238t formed by each of the plurality of outer protrusions 238 in the circumferential direction is formed to be smaller than a spacing L3 between the plurality of outer protrusions 238 in the circumferential direction.

Each of the plurality of outer protrusions 238 may be formed to extend long in the direction in which the transmission gear shaft 232 extends.

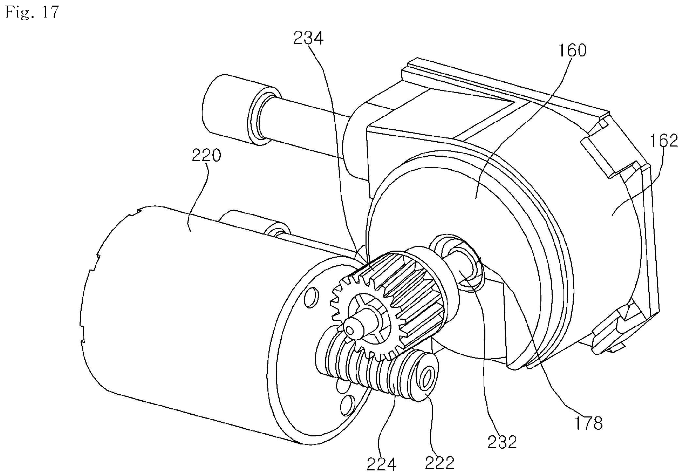

With reference to FIG. 17, the arrangement between the motor 220, the transmission gear 230, and the pump 160, and the operation of the pump 160 will be explained.

The motor shaft 222 is arranged perpendicularly to the transmission gear shaft 232. The rotor 176 of the pump 160 rotates with the transmission gear shaft 232 as the center of rotation.

The second gear 236 of the transmission gear 230 is inserted into the gear groove 178 of the pump 160. The motor shaft 222 is arranged perpendicularly to the transmission gear shaft 232. The rotor 176 of the pump 160 rotates with the transmission gear shaft 232 as the center of rotation.

The motor shaft 222 rotates due to the operation of the motor 220, and the second gear 236, which meshes with the motor gear 224, rotates.

The motor gear 224 has a worm gear structure, and the second gear 236 has a structure corresponding to a worm wheel. Therefore, as the motor shaft 222 rotates multiple times due to the operation of the motor 220, the second gear 236 may rotate partially. That is, precise control of the pump 160 by the motor 220 is possible. In addition, the pump 160 may be driven even with a small force from the motor 220. Therefore, even when the motor 220 of small size and specifications is used, the pump 160 may be operated precisely.

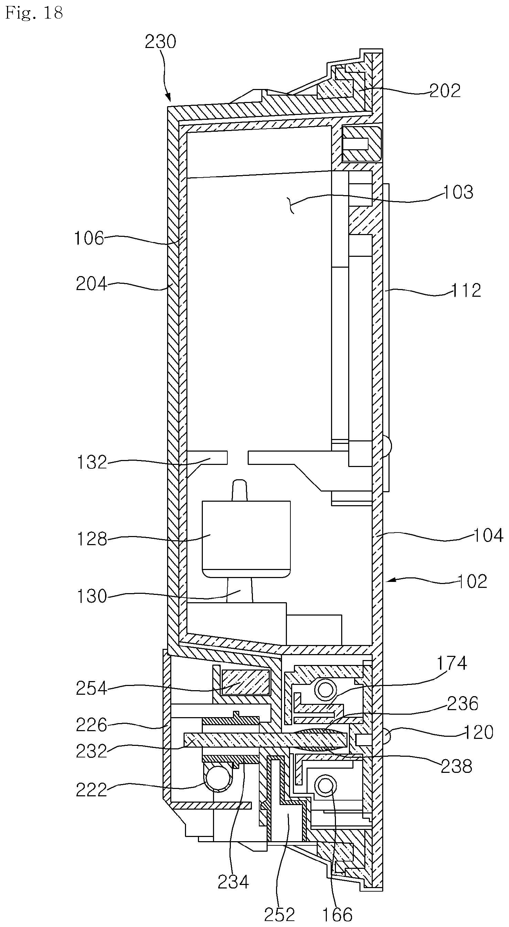

Referring to FIG. 18, the arrangement of the transmission gear 230 when the detergent tank 102 is mounted to the housing 200 will be described.

When the detergent tank 102 is mounted to the housing 200, the first sealer 240 is arranged between the detergent tank 102 and the housing 200.

When the detergent tank 102 is mounted to the housing 200, the floater 128 is arranged above the water level sensor 254.

When the detergent tank 102 is mounted to the housing 200, the transmission gear 230 is inserted into the gear groove 178. When the detergent tank 102 is mounted to the housing 200, the second gear 236 of the transmission gear 230 is inserted into the gear groove 178.

When the detergent tank 102 is mounted to the housing 200, the detection sensor 252 is arranged below the pump 160.

The detection sensor 252 is arranged below the pump 160 and may sense the magnet 182 arranged on the pump 160. The detection sensor 252 may sense whether the pump 160 is operating by sensing the magnet 182 arranged on the pump 160.

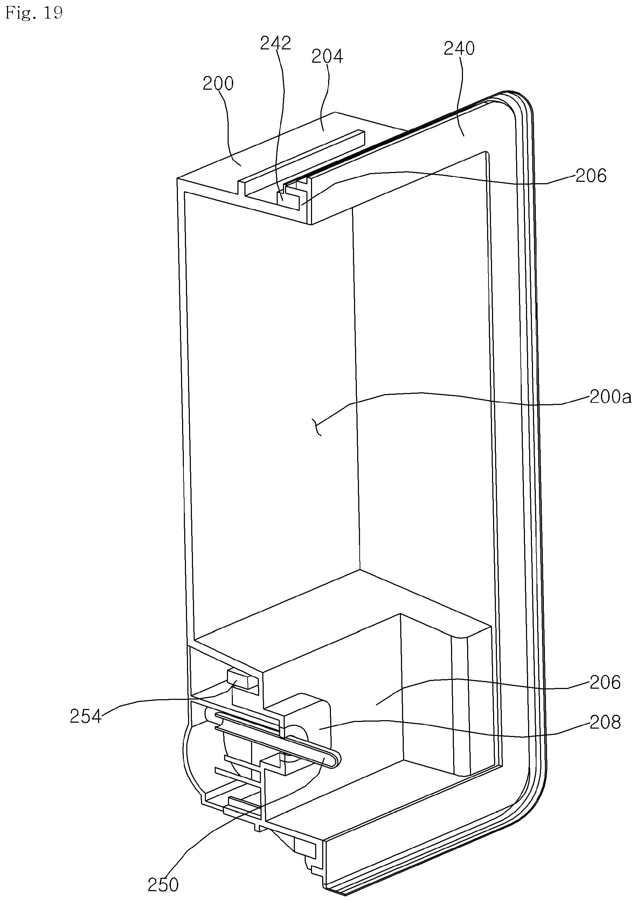

Referring to FIG. 19, the structure of the housing 200 and the arrangement of the temperature sensor will be described.

The housing 200 forms the mounting space 200a in which the detergent tank 102 is arranged.

The housing 200 includes a perimeter wall 202, the first housing body 204 protruding rearward from the perimeter wall 202, and the second housing body 206 protruding rearward from the perimeter wall 202 and arranged below the first housing body 204.

The first sealer 240 is arranged in front of the perimeter wall 202. The second sealer 242 is arranged behind the perimeter wall 202. The perimeter wall 202 forms the space into which a detergent tank 102 is inserted.

The first housing body 204 forms the space into which the first tank body 106 is arranged. The second housing body 206 forms the space into which the second tank body 108 is arranged. The space formed by the second tank body 108 may be formed to be smaller than the space formed by the first tank body 106.

The motor 220 is arranged behind the second housing body 206. The temperature sensor 250 is arranged in the second housing body 206. The water level sensor 254 is arranged behind the second housing body 206. The water level sensor 254 is arranged above the temperature sensor 250.

The sensor mounting portion 208 in which the temperature sensor 250 is arranged is arranged in the second housing body 206. The sensor mounting portion 208 has a structure that protrudes forward from the second housing body 206. The sensor mounting portion 208 protrudes forward with a width greater than the width formed by the temperature sensor 250.

The temperature sensor 250 is arranged to protrude forward relative to the sensor mounting portion 208.

The detection sensor 252 (refer to FIG. 18) is arranged behind the second housing body 206. The detection sensor mounting portion 210 that protrudes forward from the area in which the detection sensor 252 is arranged is arranged on one side of the second housing body 206.

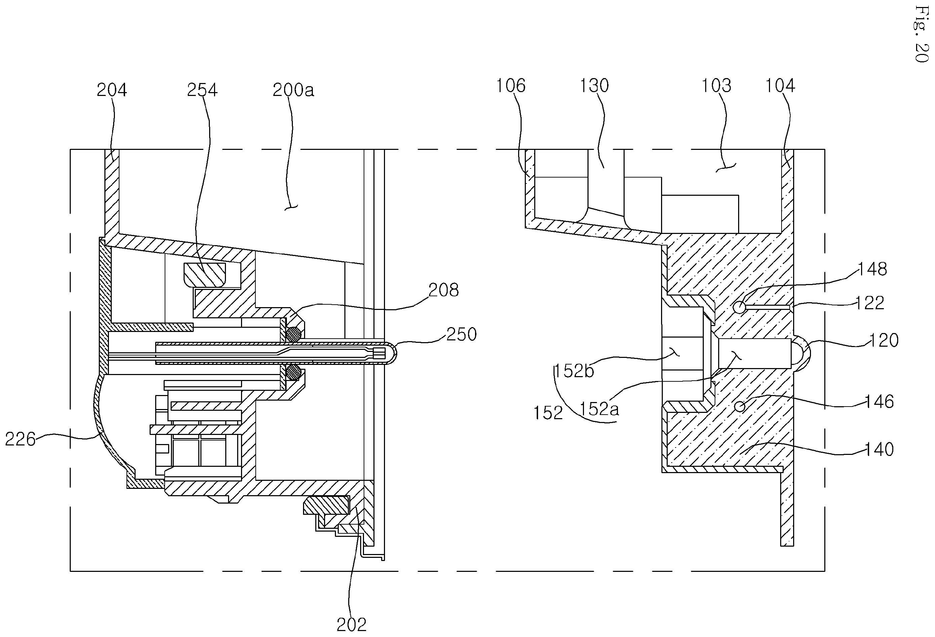

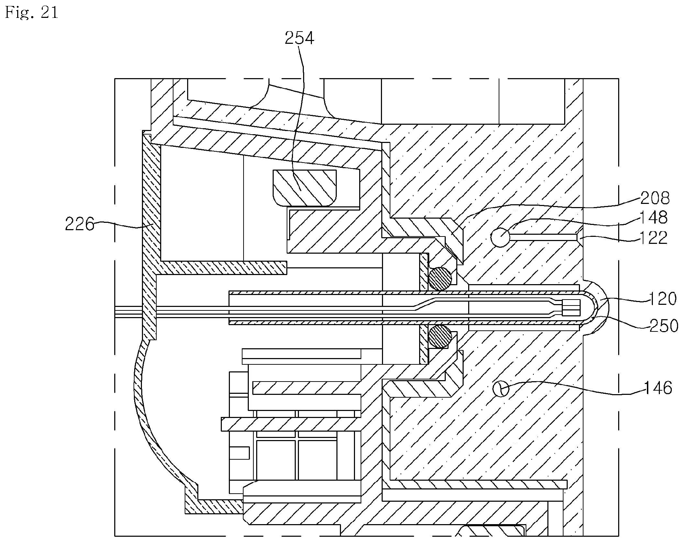

Referring to FIGS. 20 and 21, the arrangement of the temperature sensor 250 when the detergent tank 102 is mounted to the housing 200 will be described.

When the detergent tank 102 is mounted to the housing 200, the temperature sensor 250 is inserted into the first sensor groove 152a. When the detergent tank 102 is mounted to the housing 200, the sensor mounting portion 208 is inserted into the second sensor groove 152b.

When the detergent tank 102 is mounted to the housing 200, one side of the temperature sensor 250 is arranged to be in contact with the sensor cover 120.

The temperature sensor 250 is arranged below the outlet flow path 148. The temperature sensor 250 is arranged below the discharge port 122. The sensor cover 120 is arranged to protrude forward from the detergent tank 102. The sensor cover 120 is arranged below the discharge port 122.

The temperature sensor 250 is arranged between the outlet flow path 148 and the inlet flow path 146.

When the detergent tank 102 is mounted to the housing 200, the water level sensor 254 is arranged below the floater 128. Accordingly, the water level sensor 254 may sense the water level of the detergent tank 102 by sensing the distance between the water level sensor and the floater 128.

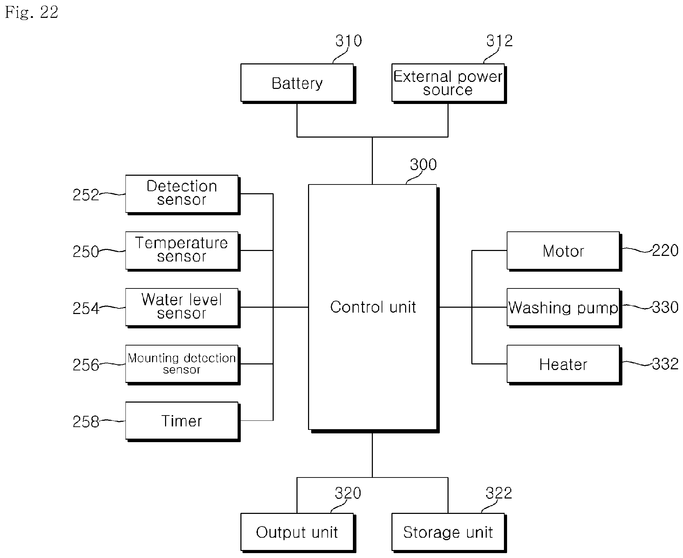

With reference to FIG. 22, a control unit of the dishwasher and configurations related thereto will be described.

The dishwasher of the present disclosure may include a control unit 300.

The control unit 300 may sense whether the pump 160 operates based on a signal sensed by the detection sensor 252. The control unit 300 may sense whether detergent is discharged from the detergent tank 102 based on a temperature change sensed by the temperature sensor 250. The control unit 300 may sense the level of detergent stored inside the detergent tank 102 based on a signal sensed by the water level sensor 254. The control unit 300 may sense whether the detergent tank 102 is mounted to the tank housing 200 based on a signal sensed by the mounting detection sensor 256.

The control unit 300 may sense a time measured by a timer 256.

Specifically, the detection sensor 252 may sense the number of revolutions of the pump 160 based on a magnet mounted on the pump 160.

The temperature sensor 250 may sense whether detergent is discharged by sensing a temperature change due to the discharge of detergent through the discharge port (). The water level sensor 254 may sense the water level inside the detergent tank 102 by sensing the relative position of the floater 128.

The timer 256 may measure time from a specific point in time. As an example, the timer may measure the time after the operation of the motor 220 stops. The control unit 300 may sense the accumulated time since the operation of the motor 220 stops based on the time measured by the timer 256.

The control unit 300 may drive the motor 220 so that the detergent stored in the detergent tank 102 is discharged into the tub 14 through the pump 160. The control unit 300 may rotate the motor 220 in a forward direction or in a reverse direction.

The control unit 300 may operate the washing pump 160 to supply washing water stored in the sump to the tub 14. The control unit 300 may heat the washing water stored in the sump (not illustrated).

The control unit 300 may be operated by receiving power through an external power source 312. The control unit 300 may charge a battery 310 when the external power source 312 is connected.

The battery 310 may supply auxiliary power to the timer 256 when power is not supplied through the external power source 312.

The control unit 300 may output a signal through an output unit 320. The output unit 320 may use a display or a speaker.

The control unit 300 may output an error signal to the output unit 320 when a problem such as a pump error or a motor error is detected. In addition, the control unit 300 may output the power status or operating status of the dishwasher to the output unit 320.

The control unit 300 may verify the data stored in a storage unit 322. As an example, the time measured by the timer 256 is stored in the storage unit 322, and the control unit 300 may verify the measured time stored in the storage unit 322.

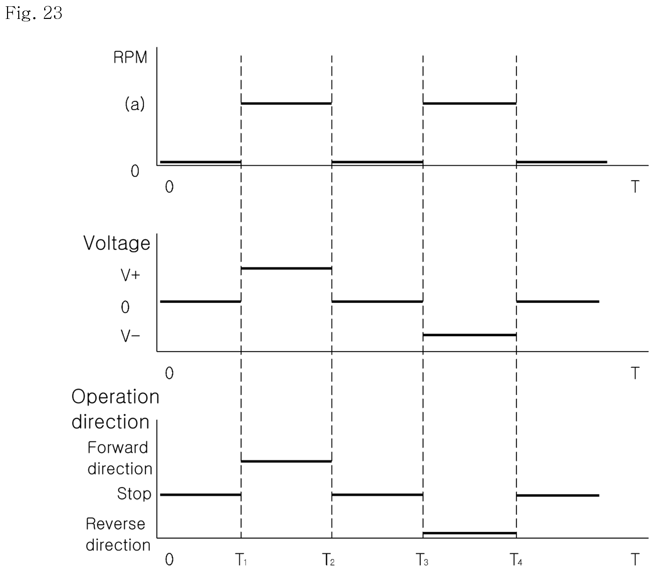

With reference to FIG. 23, the operation of the pump 160 according to the operation of the motor 220 will be described.

The motor 220 may be a DC motor. The motor 220 may rotate in a forward or reverse direction. As the motor 220 rotates in a forward or reverse direction, the pump 160 may discharge the detergent stored in the detergent tank 102 to the tub 14 or transfer the detergent present in the pump tube 166 to the detergent tank 102.

When the motor 220 and the pump 160 rotate in the forward direction, the detergent stored in the detergent tank 102 may be discharged through the discharge port (). When the motor 220 and the pump 160 rotate in the reverse direction, the detergent present in the pump tube 166 may flow toward the detergent tank 102.

The motor 220 may rotate the motor shaft 222 at a set RPM. At this time, the rotation directions of the motor 220 and the pump 160 may be changed by changing the voltage applied to the motor 220.

As illustrated in the drawings, when a (+) voltage is applied to the motor 220, the motor 220 and the pump 160 may rotate in the forward direction. When a (-) voltage is applied to the motor 220, the motor 220 and the pump 160 may rotate in the reverse direction.

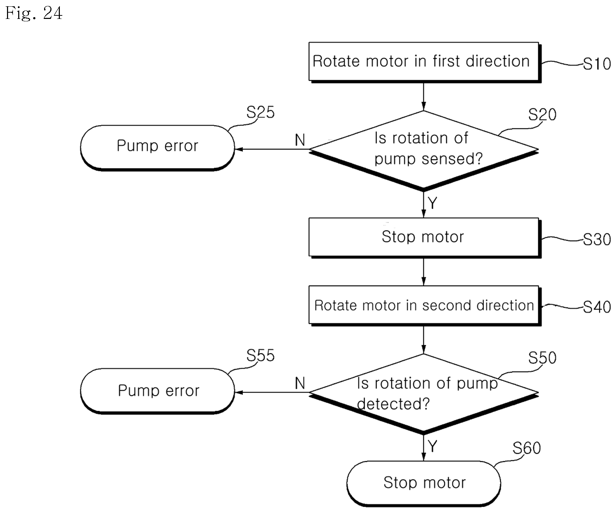

With reference to FIG. 24, a control method for a dishwasher based on rotation of the motor 220 in the first direction or the second direction will be described.

The control method according to FIG. 24 is a control method for verifying the operation of the pump 160 based on the rotation of the motor 220 in the first direction or the second direction.

A step (S10) of rotating the motor 220 in the first direction is performed. The motor 220 may be rotated in a first direction through voltage. The driving force of the motor 220 is transmitted to the pump 160 through the transmission gear 230, allowing the pump 160 to rotate in the first direction.

Here, the first direction may be a forward direction in which the pump 160 supplies the detergent stored in the detergent tank 102 to the tub 14, or a reverse direction in which the detergent present in the pump tube 166 is transferred to the detergent tank 102.

A step (S20) of sensing the rotation of the pump 160 is performed. The step (S20) of sensing the rotation of the pump 160 may be verified by the detection sensor 252 sensing the magnet 182 mounted on the pump 160. The detection sensor 252 may sense the number of revolutions of the pump 160 through the signal of the magnet 182 that is periodically sensed.

However, when the detection sensor 252 does not sense the rotation of the pump 160, a step (S25) of outputting a pump error may be performed.

When the rotation of the pump 160 is sensed by the detection sensor 252, a step (S30) of stopping the motor 220 is performed. Afterward, a load generated when operating the motor 220 in the opposite direction may be minimized.

Afterward, a step (S40) of rotating the motor 220 in the second direction is performed.

The second direction may be opposite to the first direction. Therefore, when the first direction is set to the forward direction, the second direction may be the reverse direction. Conversely, when the first direction is set to the reverse direction, the second direction may be the forward direction.

When the motor 220 rotates in the second direction, the transmission gear 230 also rotates in the opposite direction, and the pump 160 engaged with the transmission gear 230 may also rotate in the second direction.

A step (S50) of sensing the rotation of the pump 160 is performed. Even when the pump 160 rotates in the second direction, the detection sensor 252 may sense the number of revolutions of the pump 160 through the signal of the magnet 182 that is periodically sensed.

When the detection sensor 252 fails to sense the rotation of the pump 160, a pump error is output (S55), and when the rotation of the pump 160 is sensed, the motor 220 may stop (S60).

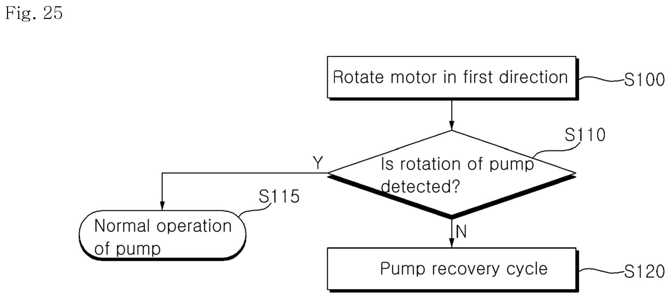

With reference to FIG. 25, a control method for a dishwasher in case of a malfunction of the pump 160 is described.

A step (S100) of rotating the motor 220 in the first direction is performed. When the dishwasher is operating normally, the first direction may be the direction in which the pump 160 is rotated in the forward direction. That is, detergent may be supplied to the tub 14 through the step () of rotating the motor 220 in the first direction.

A step (S110) of sensing the rotation of the pump 160 is performed. The detection sensor 252 senses the rotation of the pump 160 by sensing the magnet 182.

When the rotation of the pump 160 is sensed, it may be confirmed that the pump 160 normally operates (S115).

When rotation of the pump 160 is not sensed, a pump recovery cycle (S120) to release locking of the pump 160 may be performed.

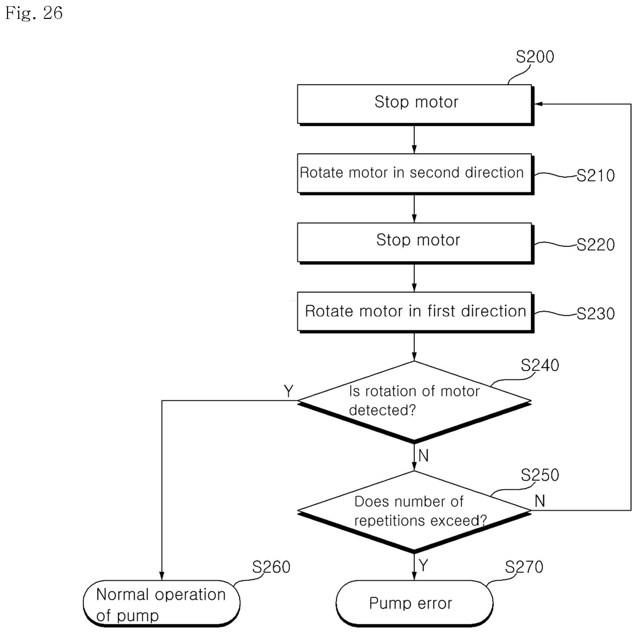

With reference to FIG. 26, the pump recovery cycle will be described.

A step (S200) of stopping the motor 220 is performed.

Afterward, a step (S210) of rotating the motor 220 in the second direction is performed. In the previous process, when the first direction is the forward direction of the motor 220, the motor 220 may be rotated in the reverse direction.

Additionally, a step (S220) of stopping the motor 220 again is performed, and a step (S230) of rotating the motor 220 in the first direction is performed.

Afterward, the normal operation of the motor 220 is verified through a step (S240) of sensing the rotation of the pump 160 by the detection sensor 252.

When the rotation of the pump 160 is sensed, it may be verified that the pump 160 is normally operates (S260).

However, when the rotation of the pump 160 is not sensed by the detection sensor 252, the steps S200 to S240 are performed repeatedly. When the rotation of the pump 160 is not sensed by the detection sensor 252, the steps of rotating the motor 220 in the second direction and rotating the motor 220 in the first direction are performed repeatedly.

When the number of times the steps S200 to S240 are repeated is equal to or greater than the set number of times, a pump error is output (S270).

In another embodiment, in the pump recovery cycle, the process of rotating the motor 220 alternately in the first direction and the second direction is performed. The process of rotating the motor 220 alternately in the first direction and the second direction may be performed for a set time. The rotation of the pump 160 may be sensed by performing the process of rotating the motor 220 alternately in the first direction and the second direction.

Afterward, when the rotation of the pump 160 is sensed, the motor 220 is operated normally. However, when the rotation of the pump 160 is not sensed, a pump error may be output.

Although preferred embodiments of the present disclosure have been illustrated and described above, the present disclosure is not limited to the specific embodiments described above, and various modifications are possible by those skilled in the art to which the invention belongs without departing from the essence of the present disclosure claimed in the patent claims, and such modifications should not be understood individually from the technical concept or perspective of the present disclosure.

## Claims

1. A dishwasher comprising:
a tub forming a washing space in which dishes are placed, and having one open side;
a door disposed on one side of the tub, and opens and closes the open side of the tub; and
a detergent supply device that supplies detergent to the washing space,
wherein the detergent supply device includes
a detergent tank forming a storage space in which detergent is stored,
a housing forming a mounting space where the detergent tank is mounted,
a pump which is mounted on one side of the detergent tank and transfers the detergent stored in the storage space to the washing space, and
a motor disposed on one side of the housing and operates the pump,
wherein the pump includes:
a pump tube connected to the detergent tank so as to supply the detergent stored in the detergent tank to the washing space,
a plurality of pressing rollers which are connected to the motor so as to rotate about a pump rotation shaft, and which press one side of the pump tube, and
a magnet which rotates about the pump rotation shaft, and
a detection sensor disposed in the housing to sense the number of revolutions of the pump by sensing the magnet.

2. The dishwasher of claim 1, wherein the pump includes a rotor connected to the motor to rotate the plurality of pressing rollers and the magnet.

3. The dishwasher of claim 2, wherein each of the plurality of pressing rollers is disposed circumferentially spaced apart from each other at a position radially outwardly spaced with respect to an axis of rotation on which the rotor rotates, and
the magnet is disposed between the plurality of pressing rollers.

4. The dishwasher of claim 2, wherein each of the plurality of pressing rollers is disposed circumferentially spaced apart from each other at a position radially outwardly spaced with respect to an axis of rotation on which the rotor rotates, and
the magnet is disposed on any one of the plurality of pressing rollers.

5. The dishwasher of claim 2, further comprising a transmission gear that transmits a driving force of the motor to the pump,
wherein a gear groove to which one side of the transmission gear is connected is formed on one side of the rotor.

6. The dishwasher of claim 1, wherein the detection sensor is disposed radially outward from the pump with respect to the pump rotation shaft.

7. A control method for a dishwasher, the control method comprising:
operating a motor to move a pressing roller that pressurizes a pump tube connected to a detergent tank to supply detergent to a tub, thereby rotating a pump in a first direction;
sensing, by a detection sensor, a magnet rotating together with the pressing roller to sense rotation of the pump in the first direction; and
performing a pump locking release step of operating the motor to rotate the pump in a second direction opposite to the first direction when the rotation of the pump is not sensed by the detection sensor.

8. The control method of claim 7, wherein the pump locking release step includes
operating the motor to rotate the pump in the second direction,
operating the motor to rotate the pump in the first direction, and
sensing the rotation of the pump.

9. The control method of claim 8, further comprising stopping the motor between the rotating of the pump in the second direction and the rotating of the pump in the first direction.

10. The control method of claim 9, wherein a time required for the stopping of the motor is set to be shorter than a time required for each of the rotating of the pump in the second direction and the rotating of the pump in the first direction.

11. The control method of claim 8, wherein when the rotation of the pump is not sensed in the pump locking release step, the rotating of the pump in the second direction and the rotating of the pump in the first direction are repeatedly performed.

12. The control method of claim 11, wherein when the number of repetitions of rotating the pump in a reverse direction and rotating the pump in a forward direction exceeds a set number of times, an error is output to a user.

13. A control method for a dishwasher, the control method comprising:
operating a motor to rotate a pump in a first direction to move a pressing roller which pressurizes a tube connected to a detergent tank and configured to supply detergent to a tub;
sensing, by a detection sensor, a magnet rotating together with the pressing roller to sense rotation of the pump; and
operating the motor such that the pump alternately rotates in a second direction opposite to the first direction and in the first direction when the rotation of the pump is not sensed by the detection sensor.

14. The control method of claim 13, further comprising sensing the rotation of the pump by the detection sensor after the pump rotates alternately,
wherein a pump error is output when the rotation of the pump is not sensed by the detection sensor.
